# EUROPÄISCHE PATENTSCHRIFT

(11) **EP 1 236 389 B1**
(45) Veröffentlichungstag und Bekanntmachung des Hinweises auf die Patenterteilung: **11.07.2012**
(21) Anmeldenummer: 02003393.2
(22) Anmeldetag: 14.02.2002
(51) Int. Cl.: A01D 41/127

(54) **Selbstfahrende landwirtschaftliche Erntemaschine mit einer Einrichtung zur Einstellung der Arbeitsdrehzahl**
Automotive agricultural harvesting machine with an arrangement for adjusting the engine working speed
Machine agricole de récolte automotrice avec un dispositif pour ajuster la vitesse de rotation du moteur

(30) Priorität: 02.03.2001 DE 10110232
(43) Veröffentlichungstag der Anmeldung: 04.09.2002
(73) Patentinhaber: CLAAS Selbstfahrende Erntemaschinen GmbH, 33428 Harsewinkel (DE)
(72) Erfinder: Pollklas, Manfred, 33378 Rheda-Wiedenbrück (DE); Isfort, Heinrich, 48249 Dülmen (DE)

(56) Entgegenhaltungen:
- EP-A- 0 408 170
- EP-A- 1 172 248
- DE-A- 3 810 724
- DE-A- 4 219 050
- US-A- 5 947 818

## Beschreibung

Die Erfindung betrifft eine selbstfahrende landwirtschaftliche Erntemaschine nach dem Oberbegriff des Anspruchs 1. Eine solche Maschine ist beispielsweise aus EP 0408170 bekannt.

Unter einer selbstfahrenden landwirtschaftlichen Erntemaschine ist eine landwirtschaftliche Maschine zu verstehen, die im Arbeitsbetrieb mit einer festen Vorgabe für die Abtriebsdrehzahl des Antriebsmotors betrieben wird, wobei die Fahrgeschwindigkeit der Maschine bereichsweise davon unabhängig variiert werden kann. Diese Abtriebsdrehzahlvorgabe ist für den von der Erntemaschine durchgeführten Arbeitsprozess notwendig, da ein angetriebenes Bearbeitungsaggregat und eventuell auch Zuführ- und Fördereinrichtungen für eine sichere Funktion eine bestimmte Mindestantriebsdrehzahl erfordern. Auch die von dem Antriebsmotor angetriebenen Nebenaggregate, wie beispielsweise eine Hydraulikpumpe benötigen zur Sicherstellung ihrer Funktion eine bestimmte Antriebsdrehzahl.

Solche Erntemaschinen sind beispielsweise Mähdrescher oder selbstfahrende Feldhäcksler. An einem selbstfahrenden Feldhäcksler ist die Antriebswelle der Häckseltrommel direkt mittels eines Riemenantriebes mit der Motorabtriebswelle verbunden, so dass die Motordrehzahl und die Häckseltrommeldrehzahl in einer festen Beziehung stehen. Der Fahrantrieb ist an solchen Maschinen hydrostatisch ausgeführt. Damit nun der Häckselprozess selbst sicher abläuft sowie das gehäckselte Erntegut sicher an ein nachgeordnetes Wurfgebläse übergeben werden kann, muß die Häckseltrommel mit einer bestimmten Drehzahl und somit auch der Antriebsmotor mit einer Mindestdrehzahl angetrieben werden. Eine Unterschreitung dieser Drehzahl führt unweigerlich zu einer Verstopfung der Erntemaschine und zu einem Stillstand des Feldhäckslers. Auch das erwähnte, nachgeschaltete Würfgebläse benötigt zur Sicherstellung seiner gewünschten Arbeitsfunktion eine bestimmte Antriebsdrehzahl.

Die in Rede stehenden Erntemaschinen nehmen prinzipiell mittels einer Erntegutaufnahmeeinrichtung, wie beispielsweise einem Schneidwerk oder einer Pickup, Erntegut von einem Bearbeitungsfeld auf. Die Vorfahrtgeschwindigkeit der Erntemaschine kann von dem Bediener der Erntemaschine unabhängig von der Motordrehzahl vorgewählt werden. Über die Wahl der Vorfahrtgeschwindigkeit kann somit der Bediener der Erntemaschine die Belastung der Erntemaschine mit Erntegut und damit auch die von dem Motor abgeforderte Leistung beeinflussen. Die abgegebene Motorleistung bestimmt auch die momentane Drehzahl des Antriebsmotors und damit auch die Antriebsdrehzahl der Bearbeitungsaggregate und der weiteren Nebenaggregate.

Die aus dem Stand der Technik bekannten selbstfahrenden Erntemaschinen sind mit einer Einrichtung ausgestattet, die eine manuelle Einstellung der Vorgabe der Antriebsmotordrehzahl im Arbeitsbetrieb über mechanische, elektrohydraulische oder elektronische Mittel erlauben. An einigen Erntemaschinen erlauben diese Einrichtungen nur eine Vorwahl mit einer Leerlaufoder einer maximalen Antriebsmotordrehzahl. Diese Einrichtungen stellen sicher, dass die Bediener der Erntemaschinen klar zwischen der Leerlauf- und der Arbeitsdrehzahl unterscheiden können. Eine Beaufschlagung der Bearbeitungsaggregate mit der maximalen Antriebsmotordrehzahl, wird dadurch fast immer sichergestellt. Diese Einrichtungen schließen aber nachteilig aus, dass einer Anpassung der Vorgabe der Abtriebsdrehzahl des Antriebsmotors im Arbeitsbetrieb, an spezielle Ernte- und Maschinenbedingungen Rechnung getragen werden kann. An einigen Erntemaschinen sind diese Einrichtungen auch in abgewandelter Form bekannt geworden. An solchen Einrichtungen ist dann eine stufenlose Vorgabe der Motordrehzahl des Antriebsmotors über den gesamten Drehzahlbereich im Arbeitsbetrieb möglich. Der Bediener der jeweiligen Erntemaschine kann somit die Drehzahl des Antriebsmotors im Arbeitsbetrieb frei wählen, verfügt aber über keine Information, ob mit der gewählten Drehzahl ein sicherer Arbeitsbetrieb der Erntemaschine, beispielsweise ein sicherer Betrieb des Hydrauliksystems möglich ist. Vielfach kann eine falsche Einstellung der Drehzahl erst dann im Arbeitsbetrieb von dem Bediener der Erntemaschine erkannt werden, wenn ein Bearbeitungsaggregat oder beispielsweise das Wurfgebläse seine Arbeit nicht mehr sicher ausführt. Eine hierauf folgende Reaktion des Bedieners, durch zum Beispiel eine Veränderung der Fahrgeschwindigkeit oder der Vorgabe der Drehzahl des Antriebsmotors, kommt dann in den überwiegenden Fällen zu spät und eine Verstopfung oder eine Beschädigung der Erntemaschine kann dann nicht mehr verhindert werden.

Aus der DE 38 10 724 A1 sind weiterhin Anordnungen und ein Verfahren zur Regelung der Motordrehzahl an selbstfahrenden Arbeitsmaschinen bekannt geworden, die eine automatische Regelung der Motordrehzahl im Arbeitsbetrieb einer Arbeitsmaschine offenbaren. In einer ersten Anordnung werden von dem Antriebsmotor mehrere Arbeitselemente angetrieben, wobei der Antriebsmotor an seinem Abtrieb mit einer Drehzahl/- Drehmomentmessstelle und der jeweilig abgehende Antriebsstang mit einem Drehzahl/- Drehmomentwandler ausgestattet ist. In einer zweiten Anordnung wird dem Antriebsmotor ein Drehzahl/- Drehmomentwandler und den jeweils abgehenden Antriebsstängen je eine Drehzahl/- Drehmomentmessstelle zugeordnet. Eine übergeordnete Regelung veranlasst in beiden Anordnungen, dass die Motordrehzahl immer an das von den Arbeitselementen angeforderte Drehmoment angepasst und außerdem an dem/ den Drehzahl/- Drehmomentwandler(n) eine Übersetzung für eine konstante Drehzahl des jeweiligen Arbeitsorgans bei unterschiedlichen Motordrehzahlen eingestellt wird. Die von dem Arbeitsfahrzeug aufgenommene Erntegutmenge unterliegt bekanntlich einer ständigen standort- und wachstumsbedingten Änderung. Dies führt an der offenbarten Einrichtung zu eine ständige Änderung der Drehmomentanforderung an den Antriebsmotor. Eine entsprechende, ständige Verstellung des/ der Drehzahl/- Drehmomentwandler(s), würde eine abhängige weitere Reaktion der offenbarten Einrichtung sein. Nachteilig wirkt sich die Trägheit der offenbarten Einrichtung auf diese Erntegutänderung aus. Besonders hervor tritt dieser Nachteil bei einer Erhöhung der aufgenommenen Erntegutmenge. Diese kann erst dann von der Steuerung erkannt werden, wenn zuvor ein Arbeitselement mittels der Drehzahl-/ Drehmomentmessstelle die veränderte Drehmomentanforderung ermittelt hat. Die Verstellzeiten der jeweiligen Drehzahl/- Drehmomentwandler und des Antriebsmotors führen zu einer jeweiligen, verspäteten Reaktion auf diese Änderung. Dies kann zu Verstopfungen und einem daraus resultierenden Stillstand der Arbeitsmaschine führen. Ferner wirkt sich die ständige Änderung der Motordrehzahl negativ auf den Kraftstoffverbrauch sowie die ständigen Änderungen der Übersetzung der Drehzahl/- Drehmomentwandler negativ auf die Lebensdauer der Wandler und Stelleinrichtungen aus. Ein weiterer Nachteil ergibt sich dann, wenn die Erntegutaufnahme unterbrochen wird oder das Arbeitsfahrzeug am Feldende angelangt und kein Erntegut mehr aufnimmt. Hierbei würde die offenbarte Anordnung und das zugehörige Verfahren eine Verminderung der Antriebsdrehzahl bis hin zur Leerlaufdrehzahl des Antriebsmotors einstellen. Bei einer anschließenden Erntegutaufnahme reicht dann die Antriebsleistung nicht aus und der Arbeitsprozess würde zum Erliegen kommen.

Es ist nun Aufgabe der Erfindung die eingangs genannten Erntemaschinen dahingehend auszugestalten, dass die aufgezeigten Mängel behoben beziehungsweise zumindest eine weitgehende Abhilfe geschaffen wird.

Zur Lösung der Aufgabe dienen die Merkmale des Anspruchs 1. Durch diese erfindungsgemäße Einrichtung an einer selbstfahrenden landwirtschaftlichen Erntemaschine wird es erstmalig möglich, eine Motordrehzahl vorzuwählen, die sicherstellt, dass alle Arbeitsaggregate in der Erntemaschine einen sicheren Arbeitsbetrieb ermöglichen und gleichzeitig die Motordrehzahl an ernte- beziehungsweise fahrzeugspezifische Anforderungen angepasst werden kann. Dem Bediener der Erntemaschine steht dafür an seinen Bedieneinrichtungen in der Fahrerkabine zumindest ein Bedienelement, wie beispielsweise ein mehrstufiger Drehschalter oder ein Drehelement, zur Verfügung. Diese lässt dann eine gestufte oder stufenlose Variationsmöglichkeit der Vorgabe der Drehzahl des Antriebsmotors in einem Teilbereich des Drehzahlbereichs des Antriebsmotors zu. Erkennt der Bediener eines Feldhäckslers beispielsweise, dass das Wurfgebläse mit einer zu hohen Wurfleistung arbeitet, kann er mittels der erfindungsgemäßen Einrichtung, diese Leistung durch eine Reduzierung der Antriebsdrehzahl indirekt, durch eine reduzierte Vorgabe der Motordrehzahl, verringern. Die Einstellmöglichkeit ist erfindungsgemäß begrenzt, damit der Bediener eine Verstellung der Vorgabe nur in einem Bereich durchführen kann, der sicherstellt, dass alle Aggregate beziehungsweise alle von dem Antriebsmotor angetriebenen Einrichtungen bei jeder wählbaren Drehzahlvorgabe sicher betrieben werden können.

Die sich einstellende Drehzahl des Antriebsmotors am Feldende oder bei nicht voll ausgelastetem Arbeitsbetrieb der Erntemaschine, bewirken, durch die geringere Vorgabe der Antriebsmotordrehzahl, vorteilhaft eine Reduzierung des Kraftstoffverbrauches sowie eine entsprechende Lärmreduzierung.

Der erfindungsgemäße Teilbereich kann von dem Hersteller der Erntemaschine vorgegeben werden und richtet sich dann nach Erfahrungen und Messungen des Herstellers sowie nach den einzelnen Parametern der anzutreibenden Einrichtungen in der Erntemaschine und der Ausstattung der selben. Werkseitig wird dann ein Teilbereich in eine erfindungsgemäße Einrichtung hinterlegt. Wird die Maschine beispielsweise werkseitig mit einem Zwischenförderelement zwischen der Häckseltrommel und dem Wurfgebläse ausgestattet, kann die erfindungsgemäße Einrichtung werkseitig mit einem größeren Teilbereich ausgestattet werden, da dann die Gutförderung zwischen der Häckseltrommel und dem Wurfgebläse durch den Förderer auch bei einer geringeren Antriebsdrehzahl der Häckseltrommel sichergestellt und eine niedrigere Antriebsdrehzahl zulässig ist. Der erfindungsgemäße Teilbereich kann beispielsweise an einem Feldhäcksler ohne Zwischenförderelement 200 Umdrehungen pro Minute und mit Zwischenförderelement 300 Umdrehungen pro Minute betragen. Dem Bediener des Feldhäckslers wird dann im Arbeitsbetrieb die Möglichkeit gegeben, die Motordrehzahl beispielsweise zwischen 1700 Umdrehungen pro Minute beziehungsweise 1800 Umdrehungen pro Minute und 2000 Umdrehungen pro Minute vorwählen zu können.

In einer weiteren Ausführungsform der Erfindung ist die erfindungsgemäße Einrichtung derart ausgestaltet, dass der Einstellbereich veränderbar ist. Hierdurch wird vorteilhaft erreicht, dass der Einstellbereich bei einer wahlweisen Ausrüstung der Erntemaschine im Arbeitsbetrieb mit einem Zwischenförderer oder mit anderen Aggregaten oder Einrichtungen an der Erntemaschine entsprechend angepasst werden kann. Hierzu kann an der erfindungsgemäßen Einrichtung ein spezielles Bedienelement angeordnet oder eine Bedieneinrichtung mit einem speziellen Untermenüpunkt ausgestattet sein. Diese Einstellmöglichkeit sollte, zur Vermeidung von Fehleinstellungen, nur dann gegeben werden, wenn sich die Bearbeitungsorgane der Erntemaschine im Stillstand befinden. Gegebenenfalls sollte dies auch nur von einer geschulten Person mit speziellen Kenntnissen beispielsweise in Verbindung mit einem Zugangscode durchführbar sein.

In einer weiteren Ausgestaltung der Erfindung, kann der Einstellbereich in Abhängigkeit eines Parameters vorgegeben werden. Durch diese vorteilhafte Ausgestaltung der Erfindung wird eine gezielte Anpassung des Einstellbereichs an sich ändernde Arbeitsbedingungen ermöglicht. Beispielsweise wird als ein Parameter die Umgebungstemperatur, die Umgebungsluftfeuchte oder die Tageszeit berücksichtigt. Hierdurch können dann vorteilhaft, bei der Vorgabe des Einstellbereichs für die Motordrehzahl, generelle Arbeitsbedingungen mit einfließen und auf bekannte unterschiedliche Erntebedingungen reagiert werden. Es kann auch eine Kombination mehrerer Parameter, als eine Basis für die Vorgabe des Einstellbereichs ausschlaggebend, für die Vorgabe des Einstellbereichs, berücksichtigt werden.

Der Arbeitsbetrieb einer Erntemaschine erstreckt sich generell auch auf den Betrieb der Maschine mit eingeschaltetem Hauptbearbeitungsaggregat. Der mögliche Einstellbereich, kann dann in Abhängigkeit eines bestimmten Parameters größer als beim Ernten ausgelegt werden. Hierbei wird dann von den/ dem bestimmenden Parameter(n) sichergestellt, dass bei der Aufnahme von Erntegut, der Einstellbereich den Erntebedingungen entsprechend angepasst vorgegeben wird. Der Bediener hat erfindungsgemäß jederzeit die Möglichkeit, die Vorwahl der Motordrehzahl innerhalb des Einstellbereichs frei wählen zu können und kann dabei sicher sein, dass er mit seiner Vorgabe immer eine Antriebsdrehzahl der Aggregate und Elemente vorgibt, welche einen entsprechend der berücksichtigten Parameter, der Ausrüstung und den Arbeitsbedingungen sicheren Betrieb der Erntemaschine gewährleistet. Vorteilhaft wird verhindert, dass der Bediener eine falsche Motordrehzahl vorgeben beziehungsweise selbst den Einstellbereich falsch vorgeben kann. Hat ein Bediener eine von der erfindungsgemäßen Einrichtung vorgegebene Einstellgrenze als Vorgabe eingestellt und findet eine Änderung der Einstellgrenze in Abhängigkeit zumindest eines Parameters statt, so wird der Bediener darüber informiert beziehungsweise kann es so vorgesehen sein, dass eine automatische Anpassung an die neue Einstellgrenze erfolgt, indem die neue Einstellgrenze als neue Vorgabe für die Drehzahl des Antriebsmotors gewählt wird. Eine automatische Anpassung ist dann notwendig, wenn die vorgewählte Drehzahl außerhalb des neuen möglichen Einstellbereichs liegt und in Verbindung mit den Arbeitsbedingungen dann zu niedrig wäre.

In einer vorteilhaften Weiterbildung der Erfindung, wird von der Einrichtung bei der Vorgabe des Einstellbereichs wenigstens ein Parameter der Erntemaschine berücksichtigt. Die erfindungsgemäße Einrichtung kann an unterschiedlichen Erntemaschinen mit weiterhin unterschiedlichen Ausstattungen und diese wiederum mit unterschiedlichen Einstellungen betrieben werden. Die jeweilige Einstellung und Ausstattung der Erntemaschine kann in die Einrichtung eingegeben oder von der Einrichtung selbst erfasst werden. Ferner kann die erfindungsgemäße Einrichtung Bestandteil einer Steuer-/ oder Bedieneinrichtung, mit den entsprechenden Informationen über den/ die verwendeten Parameter der Erntemaschine, sein und zumindest einen Parameter der Erntemaschine berücksichtigen. Zum Beispiel ist ein Parameter der Erntemaschine die Anzahl der Messer der Häckseltrommel oder die Einstellung des Wurfgebläses, der Gegenschneide, des Zwischenförderers oder eines Crackers oder die Art des verwendeten Vorsatzgerätes sowie ein Parameter desselben. Der Parameter der Erntemaschine kann ferner von einer statischen oder auch einer mittels eines geeigneten Sensors ermittelten Einstellung der Erntemaschine repräsentiert werden. Anhand des/ der Parameter(s) wird dann der zulässige Einstellbereich für den erfindungsgemäßen Teilbereich berechnet beziehungsweise aus einem Datenspeicher ausgewählt und zur Verfügung gestellt. Eine Darstellung desselben kann beispielsweise mittels einer Anzeige erfolgen. Das gestufte oder stufenlose Einstellmittel selbst kann dann über den gesamten möglichen Einstellbereich dem vorgegebenen einstellbaren Teilbereich zugeordnet werden. Weiterhin kann auch auf einer optischen Anzeige der gesamte zulässige Teilbereich dargestellt werden. Mittels Bedientasten kann dann der Bediener der Erntemaschine in diesem Einstellbereich eine gewünschte Vorgabe der Drehzahl des Antriebsmotors frei auswählen, wobei die jeweils aktuelle Vorgabe in der selben Anzeige optisch relativ zu den Einstellgrenzen dargestellt werden kann.

In einer weiteren Ausgestaltung der Erfindung, ist der wenigstens eine Parameter der Erntemaschine ein Parameter des Antriebsmotors. Die teilweise verwendeten elektronisch geregelten Verbrennungsmotoren in Erntemaschinen erlauben eine direkte Anbindung an elektronische Anzeige- und Bedienelemente in der Erntemaschine. So kann die Vorgabe der Abtriebsdrehzahl beispielsweise über eine elektronische Datenbusanbindung direkt an den Antriebsmotor übergeben und jederzeit verändert und an spezielle Anforderungen angepasst geregelt werden. Auch lassen sich verschiedene Motorkennlinien auch während des Betriebes elektronisch vorgeben und ändern. Der Antriebsmotor selbst ist mit einer eigenen elektronischen Steuerung ausgestattet und verfügt ferner über eigene Sensoren zur Regelung der Drehzahl, des abgegebenen Drehmomentes und zur Überwachung von Abgaswerten. In der Motorelektronik können auch die Charakteristik des Motors sowie weitere Werte des Antriebsmotors hinterlegt, oder von ihr erfasst und ausgewertet sowie über eine geeignete Anbindung an weitere Einrichtungen wie beispielsweise eine Anzeige oder eine Diagnoseeinrichtung übergeben werden. Bei der Ermittlung des erfindungsgemäßen Einstellbereichs für die Vorgabe der Motordrehzahl kann vorteilhaft die Motortemperatur oder der Kraftstoffverbrauch oder ein Abgaswerte entsprechend berücksichtigt werden.

In einer weiteren vorteilhaften Ausgestaltung der Erfindung ist es vorgesehen, dass der wenigstens eine Parameter der Erntemaschine ein Parameter der Motorkühlung ist. Bei einer erfindungsgemäßen Absenkung der Antriebsdrehzahl wird die Kühlleistung der Motorkühlung durch eine geringere Antriebsdrehzahl des Lüfters zumindest im Leerlauf oder bei geringerer Belastung der Erntemaschine ebenfalls in der Summe reduziert. Es wird nun durch die erfindungsgemäße Einbeziehung zumindest eines Parameters der Motorkühlung erreicht, dass das Kühlsystem nicht überlastet wird. Zeigt nun der wenigstens eine Parameter des Kühlsystems eine solche an, wird der Einstellbereich der Vorgabe der Drehzahl für den Antriebsmotor entsprechende angepasst.

Auch in Kombination mit weiteren Parametern, wie beispielsweise mit der Umgebungstemperatur oder dem Kühlsystemdruck oder dem Verunreinigungsgrad des Kühlers, können die Parameter der Motorkühlung eine vorteilhafte Beeinflussung des Einstellbereichs der Vorgabe der Motordrehzahl bewirken und zur Sicherstellung des Arbeitsbetriebes beitragen.

Die Erfindung lässt sich vorteilhaft weiterbilden, indem die Einrichtung bei der Vorgabe des Einstellbereichs wenigstens einen Parameter des Erntegutes berücksichtigt. Mit einer Erntemaschine können unterschiedliche Erntegüter bearbeitet werden. Jedes Erntegut hat seine eigene Struktur und verursacht eine spezielle Arbeitsweise der Erntemaschine. Dafür müssen unterschiedliche Einstellungen und Ausstattungen der Erntemaschine gewählt werden. Außerdem werden die Aggregate in der Erntemaschine von den jeweiligen Erntegütern unterschiedlich belastet und besitzen ferner auch unterschiedliche Fördereigenschaften durch die Maschine. Anhand zumindest eines Parameters des Erntegutes wird erfindungsgemäß der Einstellbereich beeinflußt und somit eine vorteilhafte Anpassung des Einstellbereichs an die Parameter des Erntegutes erreicht. Besitzt das Erntegut mit den vorhanden Eigenschaften beispielsweise bekanntlich eine schlechte Fördereigenschaft durch die Erntemaschine, so muss, um eine Verstopfung der Erntemaschine zu vermeiden, die untere Einstellgrenze für die mögliche Motordrehzahlvorgabe höher gewählt werden. Weiterhin kann auch die erfahrungsgemäße Homogenität des aufgenommenen Erntegutes berücksichtigt werden. Hierbei wird dann vorteilhaft erreicht, dass für die Bearbeitung einer kurzzeitig auftretenden Belastungsspitze auch genügend Energie zur Verfügung steht.

In einer weiteren vorteilhaften Ausgestaltung der Erfindung, wird als der wenigstens eine Parameter des Erntegutes die Erntegutart berücksichtigt. Diese Einbeziehung ermöglicht vorteilhaft eine optimierte Vorgabe des Einstellbereichs für die Vorgabe der Antriebsmotordrehzahl speziell an die Erntegutart. Die Erntemaschinen, beispielsweise Mähdrescher, besitzen heute schon eine Einrichtung, mittels welcher man eine erntegutartabhängige Maschineneinstellung auswählen und aktivieren kann. Für die vorliegende Erfindung kann dann direkt auf die dort ausgewählte Erntegutart zurückgegriffen und der erfindungsgemäße Einstellbereich entsprechende eingestellt werden. Anhand der vorgewählten Erntegutart, können bestimmte Rückschlüsse auf die Ausstattung der Erntemaschine und auf die Fördereigenschaften des Erntegutes gezogen werden. Wird beispielsweise an einem Feldhäcksler die Erntegutart Siliermais ausgewählt, so wir hierdurch gleichzeitig die Art des verwendeten Erntegutvorsatzes, die Ausstattung des Feldhäckslers mit einem Nachzerkleinerungseinrichtung (Cracker) und eine Aussage über die Homogenität des Erntegutes vorgegeben. Die hierfür bekannte, gute Fördereigenschaft durch die Erntemaschine und die hohe Homogenität des Erntegutbestandes, erlauben dann einen größeren Einstellbereich der Antriebsdrehzahl im Arbeitsbetrieb. Es kann bei dieser Erntegutart eine niedrigere Antriebsdrehzahl der Aggregate zugelassen werden. Bei der Auswahl von Gras als Erntegut, muß der Einstellbereich geringer vorgegeben werden. Die Förderung dieses Erntegutes durch die Erntemaschine gestaltet sich bekanntlich gegenüber dem Erntegut Siliermais schwieriger und die Gefahr einer Verstopfung ist höher. Vorteilhaft kann durch die Angabe einer bekannten Erntegutart auch auf weitere Parameter des Erntegutes, wie Feuchtebereich oder Struktur geschlossen und der Einstellbereich entsprechend angepasst werden.

In einer weiteren Ausgestaltung der Erfindung, wird als der wenigstens eine Parameter des Erntegutes die Erntegutfeuchte berücksichtigt. Die Erntegutfeuchte stellt einen wichtigen Parameter der Fördereigenschaft des Erntegutes dar. Mittels geeigneter Sensoren kann die Erntegutfeuchte in der Erntemaschine ermittelt werden. Erfindungsgemäß wird dann der Einstellbereich für die Vorgabe der Motordrehzahl entsprechende ausgewählt und vorgegeben. Die Erntegutfeuchte kann schnellen Änderungen unterliegen und erfordert dann eine entsprechende Anpassung der Vorgabe des Einstellbereichs für die mögliche Vorgabe der Antriebsmotordrehzahl. Im besonderen ist bei hohen Erntegutfeuchten eine höhere Antriebsdrehzahl der Aggregate insbesondere der Förderelemente in einem Feldhäcksler notwendig. Der erfindungsgemäße Einstellbereich darf daher nur geringer vorgegeben werden. Ist das Erntegut jedoch trockener oder wird es im Verlauf des Tages trockener, kann ein größerer Einstellbereich zugelassen werden, weil dann die Förderelemente mit einer geringeren Antriebsdrehzahl den gleichen Fördereffekt erzielen. Der Bediener hat dann die Möglichkeit eine geringere Antriebsdrehzahl über eine reduzierte Motordrehzahlvorgabe zu wählen.

Durch eine Absenkung der Motordrehzahl im Arbeitsbetrieb wird zwar einerseits die mögliche Erntegutgeschwindigkeit durch die Erntemaschine reduziert, bewirkt aber andererseits eine verbesserte Arbeitsweise der Erntemaschine und im Besonderen, die des vorgebenden Aggregates. Diese Anpassung wird erfindungsgemäß ohne eine Änderung der Arbeitsdrehzahl nur eines Aggregate beziehungsweise ohne ein Zwischengetriebe ermöglicht. Hierdurch wird der, bekanntlich für ein Getriebe benötigte Bauraum in der Erntemaschine eingespart sowie ein unnötiger Antriebsenergieverluste vermieden. Auch die Stellmöglichkeit gestaltet sich für eine erfindungsgemäße Drehzahlvariation besonders einfach. Es werden dazu keine Getriebe oder weitere mechanische Stellelemente benötigt. Lediglich die Ansteuerung der Motordrehzahlsteuerung muß beeinflusst werden. Hierfür kann auf ein einfaches Drehpotentiometer oder auf die vorhandenen Bedienelemente oder ein Bedienterminal an der Erntemaschine zurückgegriffen werden. Damit sich nun die Antriebsdrehzahl eines Aggregates immer in einem funktionssicheren Bereich befindet, wird erfindungsgemäß der Einstellbereich für die Motordrehzahl so gewählt, dass bei dem normalen Arbeitsbetrieb und der dabei vorkommenden Belastung der Erntemaschine beziehungsweise Motordrehzahldrückung eine sichere Funktion des vorgebenden Aggregates in der Erntemaschine gegeben ist. Bei den möglichen vorgebenden Aggregaten handelt es sich um Aggregate oder Einrichtungen in der Erntemaschine, die bekanntlich eine für Ihre Arbeitsfunktion notwendige Mindestantriebsdrehzahl benötigen.

In einer besonderen Weiterbildung der Erfindung wird der Einstellbereich von dem funktionssicheren Arbeitsdrehzahlbereich des Wurfbeschleunigers vorgegeben. In einer Erntemaschine wird der überwiegende Teil der Antriebsleistung an das Hauptbearbeitungsaggregat wie beispielsweise die Häckseltrommel in einem Feldhäcksler oder die Dreschtrommel in einem Mähdrescher übertragen. Eine Drehzahldrückung des Antriebsmotors wird dann im Besonderen auch von diesem Aggregat verursacht und bewirkt dann, dass alle weiteren von dem Antriebsmotor angetriebenen Elemente in der Erntemaschine mit einer prozentual gleichen Drehzahldrückung beaufschlagt werden. Unterschreitet die Antriebsdrehzahl eines Aggregates einen bestimmten Wert, kann dieser die erforderliche Arbeitsleistung nicht mehr erbringen und es kommt zu einer Störung des Arbeitsbetriebes der Erntemaschine. Durch die erfindungsgemäße Einstellbarkeit der Antriebsmotordrehzahl im Arbeitsbetrieb, wird insbesondere für den Wurfbeschleuniger an einem Feldhäcksler eine verbesserte Arbeitsfunktion erreicht. Zu Sicherstellung seienr Arbeitsfunktion darf zum einen eine untere Antriebsdrehzahl nicht unterschritten werden. Zum anderen führt eine zu hohe Drehzahl zu einer unerwünschten Gebläsewirkung, bei welcher dann zu leichtes Erntegut aus einem Transportbehälter geblasen werden kann. Vorteilhaft werden diese Mängel durch die erfindungsgemäße Bereitstellung eines begrenzten Einstellbereichs für die Vorgabe der Motordrehzahl im Arbeitsbetrieb und durch die spezielle Beachtung der funktionssicheren Antriebsdrehzahlen des Wurfbeschleunigers behoben. Der erfindungsgemäße Einstellbereich kann somit die mögliche Vorgabe der Antriebsmotordrehzahl vor einer zu niedrigen aber auch vor einer zu hohen abhängigen Antriebsdrehzahl des Wurfbeschleunigers erntegut- beziehungsweise erntemaschinenabhängig schützen.

In einer weiteren Ausgestaltung der Erfindung wird der Einstellbereich in Abhängigkeit von wenigstens einem Parameter eines von dem Antriebsmotor angetriebenen Aggregates zugelassen oder gesperrt. Es kann an den Erntemaschinen zu Einsatzsituation kommen, bei welchem eine Anpassung der Vorgabe der Antriebsmotordrehzahl im Arbeitsbetrieb durch den Bediener der Erntemaschine nicht zweckmäßig oder nur gerade dann zweckmäßig ist. Beispielsweise muß an einem Mähdrescher die maximale Drehzahlvorgabe im Arbeitsbetrieb jederzeit vorgegeben werden, um die sichere Funktion der Maschine im Arbeitsbetrieb gewährleisten zu können. Erkennt eine Sensorik den Leerlauf einer Erntemaschine oder wird eine deaktivierte Erntegutaufnahmeeinrichtung erkannt oder wird zum Beispiel bei Stillstand des Mähdreschers der Korntank entleert, ist eine erfindungsgemäße Zulassung eines Einstellbereich zur Vorgabe einer veränderten Antriebsdrehzahl der Aggregate im Arbeitsbetrieb vorteilhaft. Eine Anpassung der Entleergeschwindigkeit des Korntankes oder ein Rangieren der Erntemaschine bei geringerer Antriebsdrehzahl im Arbeitsbetrieb, kann hiermit vorteilhaft erreicht werden. Schaltet der Bediener dann beispielsweise den Antrieb für die Entleerungseinrichtung ab oder den Erntevorsatz ein, wird der erfindungsgemäße Einstellbereich erneut gesperrt und die maximale Motordrehzahl wieder automatisch vorgegeben.

In einer vorteilhaften Weiterbildung der Erfindung, ist die Einrichtung zur Vorgabe der Arbeitsdrehzahl des Antriebsmotor im Arbeitsbetrieb, ein Bedienelement an einem Multifunktionsgriff in einer Fahrerkabine. Dies erbringt den Vorteil, dass mittels eines einfachen Drehelementes, zum Beispiel in Ausgestaltung eines Drehpotentiometers, eine Einstellung der Vorgabe der Drehzahl an den Antriebsmotor über den erfindungsgemäßen Einstellbereich leicht bedienbar und kostengünstig ausgeführt werden kann. Dem Bedienelement an dem Multifunktionsgriff ist über den gesamten Einstellbereich des Drehelementes, der erfindungsgemäße Einstellbereich für die Vorgabe Drehzahl an den Antriebsmotor zugeordnet. Über ein bekanntes Bedienelement in einer Bedienkonsole in der Fahrerkabine, wählt der Bediener der Erntemaschine die Arbeitsdrehzahl des Antriebsmotors generell aus. Die momentane Einstellung der erfindungsgemäßen Einrichtung an dem Multifunktionsgriff gibt dann die gewünschte Vorgabe der Arbeitsdrehzahl für den Antriebsmotor vor. Eine Änderung der Drehzahlvorgabe im Arbeitsbetrieb ist bei dieser Anordnung des Bedienelementes in der Erntemaschine hiermit leicht durchführbar. Ferner kann der Bediener die vorgegebene Drehzahl jederzeit anhand er relativen Stellung des Bedienelementes zu den Einstellgrenzen der Einrichtung ablesen, wobei hierfür eine Markierung und Skalierung sowie eine Stufung der Einrichtung dienlich ist.

In einer weiteren Ausgestaltung der Erfindung ist wenigstens ein Bedienelement zur Vorgabe der Drehzahl des Antriebsmotors im Arbeitsbetrieb an einem Fahr- oder Multifunktionshebel der Erntemaschine angeordnet. Hierdurch wird es dem Bediener auf eine einfache Weise ermöglicht, die Vorgabe der Drehzahl für den Antriebsmotor den Wünschen entsprechend anpassen zu können. Der Bediener bekommt vorteilhaft die Möglichkeit, diese Einstellung neben den weiteren Einstellungen der Maschine ausführen zu können, ohne dabei die Hand von dem Hebel nehmen zu müssen. Dieses Bedienelement ist vorteilhaft als ein Drehelement ausgeführt. Mittels des Bedienelementes kann der Bediener dann die Vorgabe der Motordrehzahl im gesamten zugelassenen Einstellbereich vorgeben. Die tatsächliche Vorgabe kann er auf einer Anzeigeeinrichtung in einer Bedienkonsole der Erntemaschine ablesen.
Auch kann dem oder den Bedienelement(en) eine weitere Funktion für eine Drehzahlvorgabe an den Antriebsmotor innerhalb des Einstellbereichs zugeordnet werden. Die Betätigung wenigstens eines solchen Bedienelementes, kann zum Beispiel auch die automatische Vorgabe der Drehzahl der unteren beziehungsweise der oberen Einstellgrenze des Einstellbereichs bewirken. Dies ist besonders vorteilhaft, wenn die Erntemaschine zum Stillstand kommt oder am Feldende wendet. Ein Tastendruck und die Erntemaschine wird mit einer veränderten Drehzahl angetrieben, wobei der Bediener vorteilhaft nie Gefahr läuft, die Erntegutbearbeitung mit einer zu niedrigen Drehzahl, beispielsweise nach einem Wendevorgang auf einer benachbarten Spur, aufzunehmen. So kann es ferner vorgesehen sein, dass eine Vorgabe der Drehzahl des Antriebsmotors in dem erfindungsgemäßen Einstellbereich, auch von weiteren Maschineneinstellungen oder -zuständen automatische angewählt werden kann. Die unteren Einstellgrenze, aus dem erfindungsgemäßen Einstellbereich, kann auch dann automatisch angesteuert werden, wenn eine Sicherheiteeinrichtung, wie zum Beispiel eine Steinerkennungs- oder eine Metalldetektionseinrichtung in der Erntemaschine angeprochen oder wenn der Bediener der Erntemaschine das Vorsatzgerät abgeschaltet hat. Dies führt vorteilhaft zu einer Reduzierung von Beschädigungen der Aggregate und verhindert gleichzeitig eine Verstopfung der Erntemaschine.

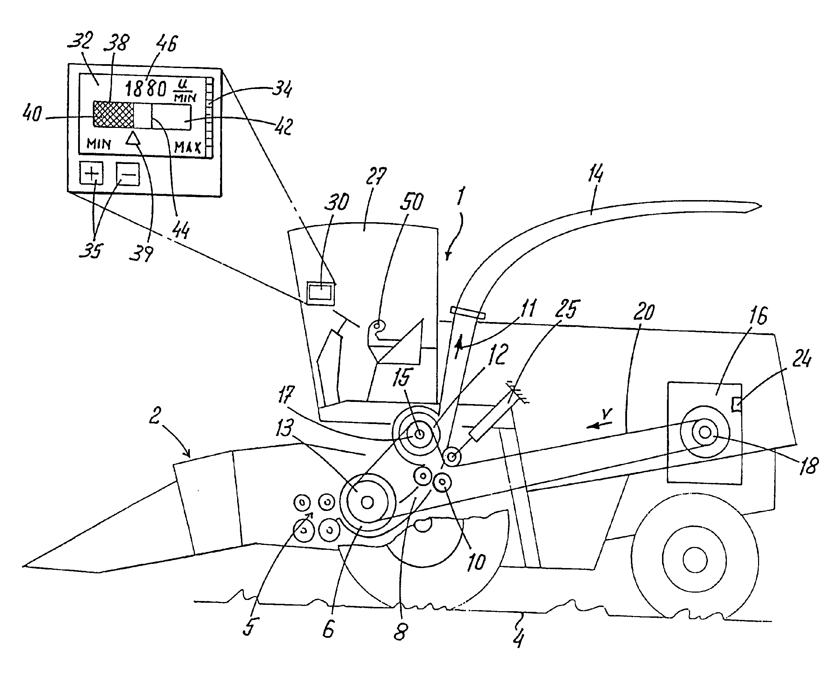

Im folgenden soll die Erfindung anhand der Figur näher erläutert werden. Dabei zeigt die Figur einen selbstfahrenden Feldhäcksler 1 mit einer Erntegutaufnahmeeinrichtung 2. Die Erntegutaufnahmeeinrichtung 2 nimmt im Arbeitsbetrieb des Feldhäckslers 1 Erntegut von einem Bearbeitungsfeld 4 auf und leitet es mittels der nachfolgenden Förder- und Vorpresselemente 5 der Häckseltrommel 6 zu. Das gehäckselte Erntegut wird dann in einem Zwischenschacht 8 an eine Nachzerkleinerungseinrichtung 10 übergeben. Diese Einrichtung 10 kann auch als ein Zwischenförderer ausgeführt sein oder auch je nach Erntegut ganz entfallen. Der Nachzerkleinerungseinrichtung 10 ist in Förderrichtung 11 des Erntegutes durch den Feldhäcksler 1 das Wurfgebläse oder der Wurfbeschleuniger 12 nachgeschaltet. Dieses bläst beziehungsweise dieser beschleunigt das Erntegut so, dass es dann mittels des Auswurfkrümmers 14 an einen hier nicht näher dargestellten Transportbehälter übergeben werden kann.
Die dargestellte Häckseltrommel 6 und der Wurfbeschleuniger 12 werden über einen gemeinsamen Antriebsriemen 20 von dem Antriebsmotor 16 angetrieben. Die Nachzerkleinerungseinrichtung 10 wird von einem nicht dargestellten weiteren Antrieb, abgehend von der Wurfbeschleunigerwelle 15, angetrieben. Die jeweilige Antriebsdrehzahl der Aggregate 6, 12 werden von dem Durchmesser der jeweiligen Riemenscheibe 13, 17 und der Riemengeschwindigkeit v vorgegeben. Diese wiederum wird von der Drehzahl des Antriebsmotors 16 und dem Durchmesser der Riemenscheibe 18 bestimmt. Der Riemen 20 wird ständig von der Spanneinrichtung 25 über eine Spannrolle auf Spannung gehalten. Ein nicht näher dargestellte Kupplung, zwischen dem Antriebsmotor und der Riemenscheibe 18, ermöglicht das Ein- und Ausschalten des Riemenantriebes.
An dem Antriebsmotor 16 ist eine Einrichtung 24 zur Vorgabe der Drehzahl des Antriebsmotors 16 angeordnet. Diese kann eine elektromotorische oder elektrohydraulische Einrichtung sowie eine elektronische Motorsteuerung sein. Die Einrichtung 24 steht mit einer weiteren Einrichtung 30 in der Fahrerkabine 27 des Feldhäckslers 1, über zum Beispiel einen elektronischen Datenbus in Verbindung. Von dieser Einrichtung 30 erhält die Einrichtung 24 die Vorgabe einer Drehzahl für den Antriebsmotor 16.
Die Einrichtung 30 selbst kann eine Steuer- und Bedieneinrichtung für den gesamten Feldhäcksler 1 oder eine Einrichtung spezielle für die Steuerung beziehungsweise Vorgabe der Antriebsmotordrehzahl sein. Diese Einrichtung 30 ist mit einer Anzeige 32 und weiteren Bedienelementen 34 und 35 ausgestattet. Mit den Bedienelementen 34, 35 kann der Bediener des Feldhäckslers 1 die Drehzahl des Antriebsmotors 16 anhand der erfindungsgemäßen Möglichkeiten auswählen. Möchte der Bediener des Feldhäckslers 1 die Vorgabe der Drehzahl des Antriebsmotors ändern, so kann er mit einem Bedienelement 34 eine Anzeige- und Einstellebene der Einrichtung 30 aktivieren und dann mittels der Bedienelemente 35, die Vorgabe der Drehzahl für den Arbeitsbetrieb des Feldhäckslers 1, innerhalb des erfindungsgemäßen Einstellbereichs, verändern. Die dargestellte Balkenanzeige 38 zeigt den gesamten Drehzahlbereich des Antriebsmotors an. Ein Teil der Balkenanzeige 38 ist als schraffierter Bereich 40 dargestellt. Innerhalb dieses Bereiches 40 kann keine Drehzahlvorgabe für den Antriebsmotor 16 ausgewählt werden. Die freie Fläche in der Balkenanzeige 38 gibt den auswählbaren, erfindungsgemäßen Einstellbereich 42 der Drehzahlvorgabe für den Antriebsmotor 16 im Arbeitsbetrieb des Feldhäckslers 1 an. Der freie Bereich 42 wird durch ein senkrechten Strich in zwei Bereiche geteilt. Dieser Teilstrich 44 zeigt die aktuell ausgewählte Drehzahlvorgabe relativ zu den möglichen Vorgaben innerhalb des Einstellbereichs 42 an. Gleichzeitig kann die vorgewählte Drehzahlvorgabe numerisch 46 auf der Anzeige 32 angezeigt werden.
Die Balkenanzeige 38 ist im Randbereich zusätzlich mit einem Symbol 39 ausgestattet. Dieses zeigt an, welche Drehzahlvorgabe von einem Bedienelement an dem Multifunktionsgriff 50 ausgewählt werden kann. Die relative Lage dieses Symbols 39 lässt sich entlang des erfindungsgemäßen Einstellbereichs 42, zum Beispiel mit den Bedienelementen 34,35, frei vorwählen. Eine Auswahl dieser Drehzahlvorgabe kann ebenfalls von weiteren Einrichtungen in dem Feldhäcksler 1 ausgewählt werden. Wird nun diese hier angezeigte relative Position des Symbols 39 am Einstellbereich der Balkenanzeige angewählt, so erscheint das Symbol 39 dann ganzflächig in der sonstigen Randfarbe. Bei einer nochmaligen Betätigung des Bedienelementes an dem Multifunktionsgriff 50 oder dem Wegfall des auslösenden Parameters, wird dann automatisch die durch den Teilstrich 44 vorgewählte Drehzahlvorgabe für den Antriebsmotor 16 an die Motordrehzahlsteuerung 24 übergeben.

## Patentansprüche

1. Selbstfahrende landwirtschaftliche, Erntemaschine (1) mit einem Antriebsmotor (16), mit wenigstens einem von diesem angetriebenen Bearbeitungsaggregat (6) und einer Einrichtung (30) zur Vorgabe der Drehzahl des Antriebsmotors (16) im Arbeitsbetrieb,
wobei
die Einrichtung zur Vorgabe der Arbeitsdrehzahl des Antriebsmotors (16) im Arbeitsbetrieb einen Einstellbereich (42) zulässt, der nur einen Teilbereich des Drehzahlbereichs des Antriebsmotors (16) umfasst, **dadurch gekennzeichnet, dass** die Antriebsdrehzahl eines Aggregates (6, 10, 12) in der Erntemaschine in Abhängigkeit von der Drehzahl des Antriebsmotors (16) variiert werden kann, wobei der Einstellbereich (42) für die Antriebsmotordrehzahl von dem funktionssicheren Arbeitsdrehzahlbereich dieses Aggregates (6, 10, 12) vorgegeben wird.

2. Selbstfahrende landwirtschaftliche Erntemaschine (1) nach Anspruch 1,
**dadurch gekennzeichnet, dass**
der Einstellbereich (42) veränderbar ist.

3. Selbstfahrende landwirtschaftliche Erntemaschine (1) nach einem oder mehreren der vorherigen Ansprüche,
**dadurch gekennzeichnet, dass**
der Einstellbereich (42) in Abhängigkeit eines Parameters vorgegeben wird.

4. Selbstfahrende landwirtschaftliche Erntemaschine (1) nach einem oder mehreren der vorherigen Ansprüche,
**dadurch gekennzeichnet, dass**
die Einrichtung (30) bei der Vorgabe des Einstellbereichs (42) wenigstens einen Parameter der Erntemaschine (1) berücksichtigt.

5. Selbstfahrende landwirtschaftliche Erntemaschine (1) nach Anspruch 4,
**dadurch gekennzeichnet, dass**
der wenigstens eine Parameter der Erntemaschine (1) ein Parameter des Antriebsmotors (16) ist.

6. Selbstfahrende landwirtschaftliche Erntemaschine (1) nach einem oder mehreren der Ansprüche 4 oder 5,
**dadurch gekennzeichnet, dass**
der wenigstens eine Parameter der Erntemaschine (1) ein Parameter der Motorkühlung ist.

7. Selbstfahrende landwirtschaftliche Erntemaschine (1) nach einem oder mehreren der vorherigen Ansprüche,
**dadurch gekennzeichnet, dass**
die Einrichtung (30) bei der Vorgabe des Einstellbereichs (42) wenigstens einen Parameter des Erntegutes berücksichtigt.

8. Selbstfahrende landwirtschaftliche Erntemaschine (1) nach Anspruch 7,
**dadurch gekennzeichnet, dass**
der wenigstens eine Parameter des Erntegutes die Erntegutart ist.

9. Selbstfahrende landwirtschaftliche Erntemaschine (1) nach einem oder mehreren der Ansprüche 7 oder 8,
**dadurch gekennzeichnet, dass**
der wenigstens eine Parameter des Erntegutes die Erntegutfeuchte ist.

10. Selbstfahrende landwirtschaftliche Erntemaschine (1) nach Anspruch 9,
**dadurch gekennzeichnet, dass**
der Einstellbereich (42) von dem funktionssicheren Arbeitsdrehzahlbereich des Wurfbeschleunigers (12) vorgegeben wird.

11. Selbstfahrende landwirtschaftliche Erntemaschine (1) nach wenigstens einem derAnsprüche 1 bis 10,
**dadurch gekennzeichnet, dass**
der Einstellbereich (42) In Abhängigkelt von wenigstens einem Parameter eines von dem Antriebsmotor (16) angetriebenen Aggregates (2,5,6,10,12) zugelassen oder gesperrt wird.

12. Selbstfahrende landwirtschaftliche Erntemaschine (1) nach wenigstens einem der Ansprüche 1 bis 11,
**dadurch gekennzeichnet, dass**
die Einrichtung zur Vorgabe der Arbeitsdrehzahl des Antriebsmotor (16) im Arbeitsbetrieb, ein Bedienelement an einem Multifunktionsgriff (50) in einer Fahrerkabine (27) ist.

13. Selbstfahrende landwirtschaftliche Erntemaschine (1) nach wenigstens einem der Ansprüche 1 bis 12,
**dadurch gekennzeichnet, dass**
an einem Multifunktionsgriff (50) in eine Fahrerkabine (27) ein Bedienelement vorhanden ist, welches zur Auswahl wenigstens einer Drehzahlvorgabe des Einstellbereichs (42) dient.

## Claims

1. A self-propelled agricultural harvesting machine (1) having a drive engine (16), at least one working assembly (6) driven thereby and a device (30) for predetermining the rotary speed of the drive engine (16) In the working mode, wherein the device for predetermining the working rotary speed of the drive engine (16) In the working mode permits an adjusting range (42) which includes only a part of the rotary speed range of the drive engine (16), **characterised in that** the working rotary speed of an assembly (6, 10, 12) In the harvesting machine can be varied In dependence on the rotary speed of the drive engine (16), wherein the adjusting range (42) for the drive engine rotary speed is predetermined by the functionally reliable working rotary speed range of said assembly (6, 10, 12).

2. A self-propelled agricultural harvesting machine (1) according to claim 1 **characterised in that** the adjusting range (2) is variable.

3. A self-propelled agricultural harvesting machine (1) according to one or more of the preceding claims **characterised In that** the adjusting range (42) is predetermined in dependence on a parameter.

4. A self-propelled agricultural harvesting machine (1) according to one or more of the preceding claims **characterised In that** the device (30) in predetermining the adjusting range (42) takes account of at least one parameter of the harvesting machine (1).

5. A self-propelled agricultural harvesting machine (1) according to claim 4 **characterised in that** the at least one parameter of the harvesting machine (1) is a parameter of the drive engine (16).

6. A self-propelled agricultural harvesting machine (1) according to one or more of claims 4 and 5 **characterised in that** the at least one parameter of the harvesting machine (1) is a parameter of the engine cooling.

7. A self-propelled agricultural harvesting machine (1) according to one or more of the preceding claims **characterised in that** the device (30) in predetermining the adjusting range (42) takes account of at least one parameter of the crop material.

8. A self-propelled agricultural harvesting machine (1) according to claim 7 **characterised In that** the at least one parameter of the crop material is the kind of crop material.

9. A self-propelled agricultural harvesting machine (1) according to one or more of claims 7 and 8 **characterised In that** the at least one parameter of the crop material is the crop material moisture content.

10. A self-propelled agricultural harvesting machine (1) according to claim 9 **characterised in that** the adjusting range (42) is predetermined by the functionally reliable working rotary speed range of the crop discharge accelerator (12).

11. A self-propelled agricultural harvesting machine (1) according to at least one of claims 1 to 10 **characterised in that** the adjusting range (42) is allowed or blocked in dependence on at least one parameter of an assembly (2, 5, 6, 10, 12) driven by the drive engine (16).

12. A self-propelled agricultural harvesting machine (1) according to at least one of claims 1 to 11 **characterised In that** the device for predetermining the working rotary speed of the drive engine (16) in the working mode Is an operating element on a multi-functional handle (50) In the driving cab (27).

13. A self-propelled agricultural harvesting machine (1) according to at least one of claims 1 to 12 **characterised In that** provided on a multi-functional handle (50) In a driving cab (27) Is an operating element which serves to select at least one rotary speed presetting of the adjusting range (42).

## Revendications

1. Machine agricole de récolte automotrice (1) comprenant un moteur d'entraînement (16), au moins un organe de travail (6) entraîné par celui-ci, et un dispositif (30) pour prescrire la vitesse de rotation du moteur d'entraînement (16) dans le mode de travail, le dispositif pour prescrire la vitesse de rotation de travail du moteur d'entraînement (16) dans le mode de travail autorisant une plage de réglage (42) qui comprend seulement une plage partielle de la plage de vitesse de rotation du moteur d'entraînement (16), **caractérisée en ce qu'**il est possible de faire varier la vitesse de rotation d'entraînement d'un organe (6, 10, 12) de la machine de récolte en fonction de la vitesse de rotation du moteur d'entraînement (16), la plage de réglage (42) pour la vitesse de rotation du moteur d'entraînement étant prescrite par la plage de vitesse de rotation de travail de cet organe (6, 10, 12) qui garantit son fonctionnement sûr.

2. Machine agricole de récolte automotrice (1) selon la revendication 1, **caractérisée en ce que** la plage de réglage (42) est modifiable.

3. Machine agricole de récolte automotrice (1) selon une ou plusieurs des revendications précédentes, **caractérisée en ce que** la plage de réglage (42) est prescrite en fonction d'un paramètre.

4. Machine agricole de récolte automotrice (1) selon une ou plusieurs des revendications précédentes, **caractérisée en ce que** le dispositif (30) tient compte d'au moins un paramètre de la machine de récolte (1) pour prescrire la plage de réglage (42).

5. Machine agricole de récolte automotrice (1) selon la revendication 4, **caractérisée en ce que** ledit au moins un paramètre de la machine de récolte (1) est un paramètre du moteur d'entraînement (16).

6. Machine agricole de récolte automotrice (1) selon une ou plusieurs des revendications 4 ou 5, **caractérisée en ce que** ledit au moins un paramètre de la machine de récolte (1) est un paramètre du refroidissement du moteur.

7. Machine agricole de récolte automotrice (1) selon une ou plusieurs des revendications précédentes, **caractérisée en ce que** le dispositif (30) tient compte d'au moins un paramètre du produit de récolte pour prescrire la plage de réglage (42).

8. Machine agricole de récolte automotrice (1) selon la revendication 7, **caractérisée en ce que** ledit au moins un paramètre du produit de récolte est la nature du produit de récolte.

9. Machine agricole de récolte automotrice (1) selon une ou plusieurs des revendications 7 ou 8, **caractérisée en ce que** ledit au moins un paramètre du produit de récolte est l'humidité du produit de récolte.

10. Machine agricole de récolte automotrice (1) selon une ou plusieurs des revendications précédentes, **caractérisée en ce que** la plage de réglage (42) est prescrite par la plage de vitesse de rotation de travail garantissant un fonctionnement sûr de l'accélérateur de décharge (12).

11. Machine agricole de récolte automotrice (1) selon au moins une des revendications 1 à 10, **caractérisée en ce que** la plage de réglage (42) est autorisée ou interdite en fonction d'au moins un paramètre d'un organe (2, 5, 6, 10, 12) entraîné par le moteur d'entraînement (16).

12. Machine agricole de récolte automotrice (1) selon au moins une des revendications 1 à 11, **caractérisée en ce que** le dispositif pour prescrire la vitesse de rotation de travail du moteur d'entraînement (16) en mode de travail est un élément de commande sur une poignée multifonction (50) dans une cabine de conduite (27).

13. Machine agricole de récolte automotrice (1) selon au moins une des revendications 1 à 12, **caractérisée en ce qu'**un élément de commande qui sert à sélectionner au moins une consigne de vitesse de rotation de la plage de réglage (42) est présent sur une poignée multifonction (50) dans une cabine de conduite (27)
